(19) Europäisches Patentamt | European Patent Office | Office européen des brevets

(11) **EP 3 636 703 B1**

(12) **EUROPEAN PATENT SPECIFICATION**

(45) Date of publication and mention
of the grant of the patent:
**11.01.2023 Bulletin 2023/02**

(21) Application number: **18812691.6**

(22) Date of filing: **28.05.2018**

(51) International Patent Classification (IPC):
**C08L 7/00** *(2006.01)*          **B60C 1/00** *(2006.01)*
**C08K 5/053** *(2006.01)*        **C08K 5/23** *(2006.01)*
**C08K 5/3477** *(2006.01)*      **C08L 9/00** *(2006.01)*
**C08J 9/10** *(2006.01)*

(52) Cooperative Patent Classification (CPC):
(C-Sets available)
**C08J 9/0023; B60C 1/00; C08J 9/0061;
C08J 9/0066; C08J 9/0085; C08J 9/103;
C08J 9/107; C08K 5/053; C08K 5/23;
C08K 5/3477; C08L 7/00; C08L 9/00;**
C08J 2201/026; C08J 2203/04; C08J 2307/00;

(Cont.)

(86) International application number:
**PCT/JP2018/020396**

(87) International publication number:
**WO 2018/225566 (13.12.2018 Gazette 2018/50)**

(54) **RUBBER COMPOSITION, VULCANIZED RUBBER, RUBBER PRODUCT, AND TIRE**

KAUTSCHUKZUSAMMENSETZUNG, VULKANISIERTER KAUTSCHUK, KAUTSCHUKPRODUKT
UND REIFEN

COMPOSITION DE CAOUTCHOUC, CAOUTCHOUC VULCANISÉ, PRODUIT DE CAOUTCHOUC,
ET PNEU

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **09.06.2017 JP 2017114403**

(43) Date of publication of application:
**15.04.2020 Bulletin 2020/16**

(73) Proprietor: **Bridgestone Corporation**
**Tokyo 104-8340 (JP)**

(72) Inventors:
• **SHODA, Yasuhiro**
**Tokyo 104-8340 (JP)**
• **HASHIGUCHI, Makoto**
**Tokyo 104-8340 (JP)**
• **SHIONO, Saaya**
**Tokyo 104-8340 (JP)**

(74) Representative: **Marks & Clerk LLP**
**15 Fetter Lane**
**London EC4A 1BW (GB)**

(56) References cited:
**WO-A1-2017/069273        WO-A1-2017/195409
CN-A- 105 419 123          JP-A- H0 984 630
JP-A- S51 125 439          JP-A- S52 128 691
JP-A- 2009 062 438         JP-A- 2009 062 438**

(52) Cooperative Patent Classification (CPC): (Cont.)
C08J 2309/00; C08J 2407/00; C08J 2409/00;
C08J 2423/06; C08J 2423/08; C08J 2491/00

C-Sets
**C08L 7/00, C08L 9/00, C08L 91/00, C08L 57/02,
C08L 23/06, C08L 23/0861, C08L 91/06,
C08K 5/053, C08K 3/04, C08K 3/36, C08K 5/09,
C08K 3/22, C08K 5/548, C08K 3/06, C08K 5/47,
C08K 5/47, C08K 5/18, C08K 5/23;
C08L 7/00, C08L 9/00, C08L 91/00, C08L 57/02,
C08L 23/06, C08L 23/0861, C08L 91/06,
C08K 5/053, C08K 3/04, C08K 3/36, C08K 5/09,
C08K 3/22, C08K 5/548, C08K 3/06, C08K 5/47,
C08K 5/47, C08K 5/18, C08K 5/3477;
C08L 9/00, C08L 7/00, C08L 91/00, C08L 57/02,
C08L 23/06, C08L 23/0861, C08L 91/06,
C08K 5/053, C08K 3/04, C08K 3/36, C08K 5/09,
C08K 3/22, C08K 5/548, C08K 3/06, C08K 5/47,
C08K 5/47, C08K 5/18, C08K 5/23;
C08L 9/00, C08L 7/00, C08L 91/00, C08L 57/02,
C08L 23/06, C08L 23/0861, C08L 91/06,
C08K 5/053, C08K 3/04, C08K 3/36, C08K 5/09,
C08K 3/22, C08K 5/548, C08K 3/06, C08K 5/47,
C08K 5/47, C08K 5/18, C08K 5/3477**

**Description**

Technical Field

The present invention relates to a rubber composition, a vulcanized rubber, a rubber product, and a tire.

Background Art

In recent years, in the field of pneumatic tires, pneumatic tires using foamed rubber in the tread portion have been manufactured and sold, and applied to studless tires specialized in on-ice performance. Further, in order to reduce a fuel consumption of automobiles and the like, there has been a demand for weight reduction of members using rubber compositions, e.g., tires.
Patent Literature 1 discloses a technique for providing a tire having excellent steering stability and wear resistance using a specific tire vulcanization mold.

Citation List

Patent Literature

PTL1: JP 2014-172379 A

Summary of Invention

Technical Problem

An object of the present invention is to provide a rubber composition from which a vulcanized rubber having excellent wear resistance and a high breaking elongation and a high breaking stress can be provided. Further, another object of the present invention is to provide a vulcanized rubber obtained by vulcanizing the rubber composition, and a rubber product and a tire comprising the rubber composition or the vulcanized rubber.

Solution to Problem

As a result of diligent studies, the present inventors have found that mixing a specific amount of a specific polyhydric alcohol into a rubber composition comprising a specific rubber component and a foaming agent can solve the above-mentioned problems.
Specifically, the present invention relates to the following <1> to <7> and <9> to <12>.

<1> A rubber composition comprising a rubber component (A), a foaming agent (B), a polyhydric alcohol (C) having 3 or more hydroxyl groups per molecule; and a composite fiber (D), wherein the rubber component (A) comprises 30% by mass or more of natural rubber based on the entire rubber component, a content of the polyhydric alcohol (C) is 1 to 6 parts by mass per 100 parts by mass of the rubber component (A), and wherein the composite fiber (D) is made of a hydrophilic resin having a coating layer formed on the surface and the coating layer is made of a polyolefin resin.
<2> The rubber composition according to <1>, wherein the polyhydric alcohol (C) is a linear polyhydric alcohol in which a linear aliphatic hydrocarbon is substituted with 3 or more hydroxyl groups.
<3> The rubber composition according to <1> or <2>, wherein the number of hydroxyl groups that the polyhydric alcohol (C) has per molecule is more than a half of the number of carbon atoms per molecule.
<4> The rubber composition according to any one of <1> to <3>, wherein a melting point of the polyhydric alcohol (C) is 170°C or less.
<5> The rubber composition according to any one of <1> to <4>, wherein a content of the foaming agent (B) is 0.1 to 20 parts by mass per 100 parts by mass of the rubber component (A).
<6> The rubber composition according to any one of <1> to <5>, wherein the foaming agent (B) comprises at least one selected from the group consisting of azodicarbonamide and dinitrosopentamethylenetetramine.
<7> The rubber composition according to any one of <1> to <6>, further comprising a filler, wherein a content of the filler is 30 to 120 parts by mass per 100 parts by mass of the rubber component (A).
<9> A vulcanized rubber obtained by vulcanizing the rubber composition according to any one of <1> to <7>.
<10> The vulcanized rubber according to <9>, having a foaming rate of 5 to 50%.
<11> A rubber product comprising the rubber composition according to any one of <1> to <7>

or the vulcanized rubber according to <9> or <10>.
<12> A tire comprising the rubber composition according to any one of <1> to <7> or the vulcanized rubber according to <9> or <10>.

Advantageous Effects of Invention

According to the present invention, a rubber composition from which a vulcanized rubber having excellent wear resistance and a high breaking elongation and a high breaking stress can be provided. The present invention further provides a vulcanized rubber obtained by vulcanizing the rubber composition, and a rubber product and a tire comprising the rubber composition or the vulcanized rubber.

Brief Description of Drawing

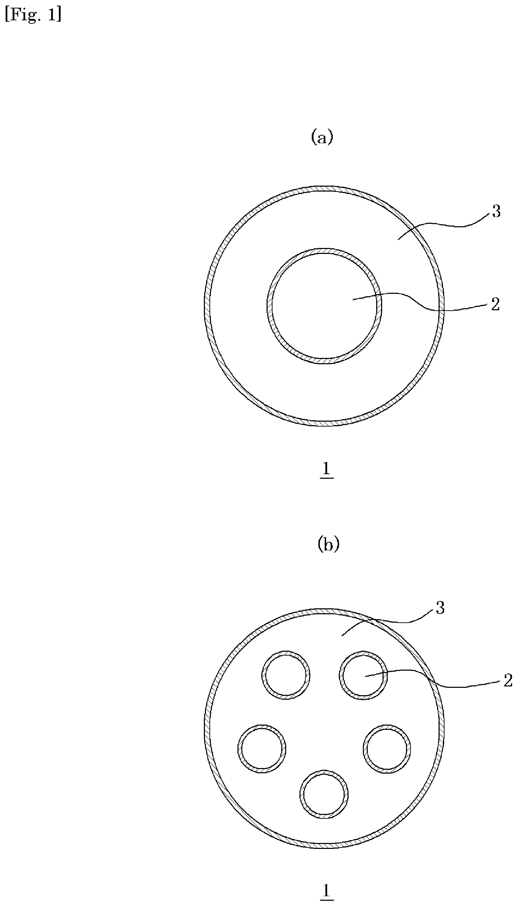

[Fig. 1] Fig. 1 is a cross-sectional view of a die attached to a twin-screw extruder for producing a composite fiber.

Description of Embodiments

Hereinunder, the present invention is described in detail on the basis of embodiments thereof. In the following description, the expression of "A to B" showing a numerical range indicates a numerical range including the end points A and B, and represents "A or more and B or less" (in the case of A < B), or "A or less and B or more" (in the case of A > B).
Part by mass and % by mass have the same meaning as part by weight and % by weight, respectively.

[Rubber Composition]

The rubber composition of the present invention comprises a rubber component (A) (hereinafter also referred to as "component A"), a foaming agent (B) (hereinafter also referred to as "component B"), and a polyhydric alcohol (C) having 3 or more hydroxyl groups per molecule (hereinafter also referred to as "component C"). The rubber component (A) comprises 30% by mass or more of natural rubber based on the entire rubber component. The content of the polyhydric alcohol (C) is 1 to 6 parts by mass per 100 parts by mass of the rubber component (A).
Conventionally, a vulcanized rubber obtained by vulcanizing a rubber composition comprising a foaming agent is greatly inferior in wear resistance, breaking elongation, breaking stress, and the like, compared to vulcanized rubber containing no foaming agent, and hence improvement thereof has been desired.
The present inventors have diligently studied and found that mixing a specific amount of a specific polyhydric alcohol improves properties such as wear resistance, breaking elongation, and breaking stress, thereby completing the present invention. Although the detailed mechanism is unknown, it is partially understood as follows.
That is, it is presumed, although the reason is unknown, that the interaction of a specific polyhydric alcohol with natural rubber serving as a rubber component results in improvement of wear resistance, breaking elongation, and breaking stress, even when a vulcanized rubber foamed with a foaming agent is used.
The present invention will be described in detail hereinunder.

<Rubber Component (A)>

The rubber composition of the present invention comprises a rubber component (A), and the rubber component (A) contains 30% by mass or more of natural rubber based on the total rubber components. When the content of the natural rubber is less than 30% by mass in the rubber component, the effect of improving wear resistance, breaking elongation, and breaking stress due to the addition of the polyhydric alcohol (C) cannot be sufficiently obtained.
The content of the natural rubber in the rubber component is 30% by mass or more, and from the viewpoint of obtaining a vulcanized rubber having further improved wear resistance, breaking elongation, and breaking stress, the content is preferably 35% by mass or more, more preferably 40% by mass or more, and still more preferably 50% by mass or more.
The rubber component may comprise another rubber other than natural rubber, and preferably does contain another rubber.
A preferred example of the other rubber is a synthetic diene rubber. Examples of the synthetic diene rubber include a polyisoprene rubber, a polybutadiene rubber (BR), a styrene-butadiene copolymer rubber (SBR), an ethylene-propylene-diene terpolymer rubber, a chloroprene rubber, a butyl rubber, a halogenated butyl rubber, and an acrylonitrile-butadiene rubber. These synthetic diene rubbers may be used singly or in combinations of two or more.
A preferred example of the other rubber is BR.
A high-cis polybutadiene rubber is preferable as the polybutadiene rubber from the viewpoint of improving wear resistance. The high-cis polybutadiene rubber refers to a high-cis polybutadiene rubber having a cis-1,4 bond content in a 1,3-butadiene unit of 90% or more and 99% or less as measured by FT-IR. The cis-1,4 bond content in a 1,3-butadiene unit of the high-cis polybutadiene rubber is preferably 95% or more and 99% or less.

The production method of the high-cis polybutadiene rubber is not particularly limited, and may be produced by a known method. Examples thereof include a method of polymerizing butadiene using a neodymium catalyst.

Examples of commercially available high-cis polybutadiene rubber include "BR01" and "T700" manufactured by JSR Corporation and "Ubepol BR150L" manufactured by Ube Industries, Ltd.

<Foaming Agent (B)>

The rubber composition of the present invention comprises a foaming agent (B). By comprising the foaming agent (B), gas generated from the foaming agent at the time of vulcanization is encapsulated by the vulcanized rubber such that the weight of the vulcanized rubber can be reduced and excellent on-ice performance can be imparted to the vulcanized rubber.

As the foaming agent (B), a foaming agent that has been conventionally used as a foaming agent for rubber compositions may be used without any particular limitation, and specific examples thereof include azodicarbonamide (ADCA), dinitrosopentamethylenetetramine (DPT), dinitrosopentastyrenetetramine, benzenesulfonylhydrazide derivatives, p,p'-oxybisbenzenesulfonylhydrazide (OBSH), ammonium bicarbonate, sodium bicarbonate and ammonium carbonate which generate carbon dioxide, nitrososulfonylazo compounds which generate nitrogen, N,N'-dimethyl-N,N'-dinitrosophtalamide, toluenesulfonylhydrazide, p-toluenesulfonylsemicarbazide, and p,p'-oxybisbenzenesulfonylsemicarbazide. Of them, azodicarbonamide (ADCA) and dinitrosopentamethylenetetramine (DPT) are preferred from the viewpoint of processability in production.

These foaming agents (B) may be used singly or in combinations of two or more.

The mixing amount of the foaming agent (B) is not particularly limited, but preferably is 0.1 to 20 parts by mass, more preferably 0.3 to 10 parts by mass, and still more preferably 0.5 to 5 parts by mass per 100 parts by mass of the rubber component (A) in consideration of obtaining the desired foaming ratio and maintaining the wear resistance.

[Foaming Aid]

The foaming agent is preferably used in combination with a foaming aid. Examples of the foaming aid include urea, zinc stearate, zinc benzenesulfinate, and zinc white. These may be used singly or in combinations of two or more.

Using the foaming aid in combination facilitates the foaming reaction and increases the degree of completion of the reaction. This enables suppression of unnecessary temporal deterioration.

The mass ratio of the foaming agent to the foaming aid (foaming agent/foaming aid) is preferably 0.3 to 2.0, more preferably 0.6 to 1.8, and still more preferably 1.0 to 1.5.

<Polyhydric Alcohol (C)>

By comprising a polyhydric alcohol (C) comprising the polyhydric alcohol (C) having 3 or more hydroxyl groups per molecule (also simply referred to as "polyhydric alcohol (C)"), the wear resistance, breaking elongation, and breaking stress of the rubber composition of the present invention is improved.

The polyhydric alcohol may be mixed as is, or may be mixed in a state of being supported with a synthetic rubber, a filler, a resin, or the like, or being kneaded with these raw materials in advance (masterbatch).

The polyhydric alcohol (C) has 3 or more hydroxyl groups per molecule. From the viewpoint of wear resistance, breaking elongation, and breaking stress, it is preferable that the number of hydroxyl groups per molecule be large, but from the viewpoint of obtaining the desired melting point, it is preferable that the number of hydroxyl groups per molecule be 4 or more and 10 or less, and more preferably 5 or more and 8 or less.

The melting point of the polyhydric alcohol (C) is preferably 170°C or less, more preferably 160°C or less, still more preferably 145°C or less, and even more preferably 130°C or less, from the viewpoint of homogeneously dispersing the polyhydric alcohol (C) in the rubber component during kneading.

The polyhydric alcohol (C) may be any of an aliphatic polyhydric alcohol, an alicyclic polyhydric alcohol, and an aromatic polyhydric alcohol, but is preferably an aliphatic polyhydric alcohol or an alicyclic polyhydric alcohol, and more preferably an aliphatic polyhydric alcohol, from the viewpoint of obtaining the desired melting point. That is, the polyhydric alcohol is preferably a chain polyhydric alcohol.

Further, it is preferable that the polyhydric alcohol have no cyclic structure because a vulcanized rubber having more excellent wear resistance can be obtained.

The aliphatic polyhydric alcohol is preferably a compound in which a linear or branched aliphatic hydrocarbon is substituted with 3 or more hydroxyl groups, and more preferably a linear polyhydric alcohol in which a linear aliphatic hydrocarbon is substituted with 3 or more hydroxyl groups. The aliphatic hydrocarbon may be either a saturated aliphatic hydrocarbon or an unsaturated aliphatic hydrocarbon, but is preferably a saturated aliphatic hydrocarbon.

It is preferable that the number of hydroxyl groups that the polyhydric alcohol (C) has per molecule be more than a half of the number of carbon atoms that the polyhydric alcohol (C) has per molecule. That is, when the number of hydroxyl groups that the polyhydric alcohol (C) has per molecule is $N_{OH}$ and the number of carbon atoms that the polyhydric alcohol (C) has per molecule is Nc, it is preferable that the following Formula (A) be satisfied:

$$N_{OH} > N_C/2 \qquad (A)$$

It is preferable, because when the above Formula (A) is satisfied, a vulcanized rubber having more excellent wear resistance, breaking elongation, and breaking stress can be obtained, a desired melting point of the polyhydric alcohol (C) can be easily obtained, and the dispersibility of the polyhydric alcohol (C) in the rubber composition is excellent.

$N_{OH}/N_c$ is preferably more than 0.5, more preferably 0.65 or more, still more preferably 0.8 or more, and even more preferably 0.9 or more.

The boiling point of the polyhydric alcohol (C) is preferably 160°C or more, more preferably 180°C or more, and still more preferably 200°C or more, from the viewpoint of suppressing the volatilization of the polyhydric alcohol (C) at the time of kneading and vulcanization of the rubber composition. The upper limit of the boiling point is not particularly limited, but is preferably 500°C or less, and more preferably 400°C or less.

Examples of the polyhydric alcohol (C) include sugar alcohols, and specific examples thereof include tetritols such as erythritol (boiling point = 329 to 331°C, melting point = 121°C) and threitol (boiling point = 330°C, melting point = 88 to 90°C), pentitols such as arabitol, xylitol (boiling point = 216°C, melting point = 92 to 96°C), and ribitol; hexitols such as sorbitol (boiling point = 296°C, melting point = 95°C), mannitol (boiling point = 290 to 295°C, melting point = 166 to 168°C), and galactitol (boiling point: 275 to 280°C, melting point: 98 to 100°C); heptitols such as boremitol; octitols such as D-erythro-D-galactooctitol; nonitols; and decitols.

There is no limitation on the configuration of these sugar alcohols. The configuration of these sugar alcohols may be D-form or L-form, or may be DL-form which has D-form and L-form in any ratios.

Of them, preferred in the present invention are mannitol, galactitol, xylitol, and sorbitol, more preferred are xylitol and sorbitol, and still more preferred is sorbitol.

In the rubber composition of the present invention, the content of the polyhydric alcohol (C) is 1 to 6 parts by mass per 100 parts by mass of the rubber component (A). When the content of the polyhydric alcohol (C) is less than 1 part by mass, desired effects cannot be acquired. When the content thereof exceeds 6 parts by mass, degradation of fracture characteristics and deterioration of a low-loss characteristics occur.

The content of the polyhydric alcohol (C) is preferably 1.2 to 5.5 parts by mass, more preferably 1.5 to 4.0 parts by mass, and still more preferably 1.5 to 3.0 parts by mass per 100 parts by mass of the rubber component (A) in the rubber composition.

<Composite Fiber (D)>

The rubber composition of the present invention comprises a composite fiber (D) (hereinafter also referred to as "component D") in addition to the above components A to C.

The composite fiber (D) is made of a hydrophilic resin having a coating layer formed on the surface. Comprising such a composite fiber (D) ensures affinity with water to be sufficient, and imparts excellent drainage performance when used in tire applications in particular. By providing the coating layer on the surface of the composite fiber (D), the dispersibility of the composite fiber (D) in the rubber composition becomes satisfactory.

The hydrophilic resin is preferably insoluble in water, and by adopting a hydrophilic resin insoluble in water, dissolution of the composite fiber (D) is suppressed, even when the composite fiber (D) is exposed on the surface of a product (for example, a tire).

Although the hydrophilic resin is not particularly limited as long as the resin is a resin capable of exerting affinity with water, that is, a resin having a hydrophilic group in the molecule, specifically, a resin containing an oxygen atom, a nitrogen atom, or a sulfur atom is preferred, and examples thereof include a resin containing at least one selected from the group consisting of -OH, -C(=O)OH, -OC(=O)R (where R is an alkyl group), $-NH_2$, -NCO and -SH. Of these groups, -OH, -C(=O)OH, -OC(=O)R, $-NH_2$ and -NCO are preferred.

Further specific examples of such hydrophilic resin include an ethylene-vinyl alcohol copolymer, a vinyl alcohol homopolymer, a poly(meth)acrylic acid resin, or a resin made of an ester of the poly(meth)acrylic acid resin (hereinafter, a copolymer containing a structural unit derived from (meth)acrylic acid and a (co)polymer containing a structural unit derived from (meth)acrylate are collectively referred to as a (meth)acrylic resin), a polyamide resin, a polyethylene glycol resin, a carboxyvinyl copolymer, a styrene-maleic acid copolymer, a polyvinylpyrrolidone resin, a vinyl pyrrolidone-vinyl acetate copolymer, a polyester resin, and a cellulosic resin. Of these, at least one resin selected from the group consisting of an ethylene-vinyl alcohol copolymer, a vinyl alcohol homopolymer, a poly(meth)acrylic acid resin, a polyamide resin, an aliphatic polyamide resin, an aromatic polyamide resin, a polyester resin, a polyvinyl alcohol resin, a cellulosic resin or a (meth)acrylic resin is preferred, and an ethylene-vinyl alcohol copolymer is more preferred.

The surface of the fiber made of the hydrophilic resin exhibits affinity with the rubber component, and it is preferable that a coating layer made of a low melting point resin having a melting point lower than the maximum vulcanization temperature (hereinafter also referred to as "low melting point resin") be formed on the surface. By forming such a coating layer, satisfactory affinity with the rubber component can be exerted in the vicinity of the composite fiber (D), while effectively maintaining affinity with water possessed by the hydrophilic resin itself, and a hydrophilic resin that is difficult to melt is captured at the time of vulcanization (foaming) and the formation of cavities inside the composite fiber (D) is promoted. That is, by securing satisfactory dispersion of the composite fiber (D) in the rubber component, the drainage effect due to the hydrophilic resin can be sufficiently exerted, and the cavities present inside the composite fiber (D) can also sufficiently function as drainage grooves. The low melting point resin melts at the time of vulcanization and becomes a coating layer having fluidity and contributes to adhesion between the rubber component (A) and the composite fiber (D), thereby imparting satisfactory drainage performance and durability.

The thickness of such a coating layer may vary depending on the mixing amount of the hydrophilic resin, the average diameter of the composite fiber (D), or the like, but is preferably 0.001 to 10 $\mu$m, and more preferably 0.001 to 5 $\mu$m. By forming the coating layer with a thickness in the above range, the desired effect in the present invention can be sufficiently exerted. Further, the coating layer may be formed over the entire surface of the hydrophilic resin, or may be formed on a part of the surface of the hydrophilic resin, and specifically, it is preferable that the coating layer be formed at a fraction of at least 50% of the entire surface area of the hydrophilic resin.

Examples of the resin having affinity with the rubber component include a resin having a solubility parameter (SP value) close to that of the rubber component.

The low melting point resin is preferably a resin of which the melting point is lower than the maximum vulcanization temperature, and the maximum vulcanization temperature means the maximum temperature reached by the rubber composition at the time of vulcanization of the rubber composition. For example, in the case of mold vulcanization, the maximum vulcanization temperature means the maximum temperature that the rubber composition reaches from the time when the rubber composition enters the mold to the time when the rubber composition exits the mold and cools, and such maximum vulcanization temperature may be measured, for example, by embedding a thermocouple in the rubber composition.

The upper limit of the melting point of the low melting point resin is not particularly limited, but is preferably selected in consideration of the above points, and is, in general, preferably lower than the maximum vulcanization temperature of the rubber composition by 10°C or more, and more preferably by 20°C or more. The industrial vulcanization temperature of the rubber composition is preferably about 190°C at the maximum, and in the case where the maximum vulcanization temperature is set to 190°C, for example, the melting point of the low melting point resin is preferably selected within a range of 190°C or less, more preferably 180°C or less, and even more preferably 170°C or less.

The melting point of the resin may be measured using a known melting point measuring device or the like, and the melting peak temperature measured using a DSC measuring device may be used as the melting point, for example.

Specifically, the low melting point resin used for the coating layer is a polyolefin resin. When the low melting point resin is a resin having a polar component within the above range with respect to all components, the difference in SP value from the rubber component is moderate and the melting point is suitably lower than the maximum vulcanization temperature, and thus the resin can be easily melted at the time of vulcanization to promote the foaming of vulcanized rubber while sufficiently ensuring satisfactory affinity with the rubber component. Therefore, it is possible to reliably form cavities inside the composite fiber while more reliably improving the dispersibility of the fiber made of the hydrophilic resin in the rubber component.

The polyolefin resin may be branched or linear. The polyolefin resin may be an ionomer resin in which ethylene-methacrylic acid copolymer molecules are cross-linked via metal ions. Specific examples thereof include polyethylene, polypropylene, polybutene, polystyrene, ethylene-propylene copolymer, ethylene-methacrylic acid copolymer, ethylene-ethyl acrylate copolymer, ethylene/propylene/diene terpolymer, ethylene/vinyl acetate copolymer, and ionomer resins thereof. These may be used singly or in combinations of two or more.

Of these, polyethylene resin, polypropylene resin, polyolefin ionomer, and maleic anhydride-modified $\alpha$-polyolefin are preferable. In a case where a polyolefin ionomer or maleic anhydride-modified $\alpha$-polyolefin capable of adhering to the hydroxyl group of the hydrophilic resin is used, the rubber strength can be further improved.

In order to produce the composite fiber (D) made of the hydrophilic resin on which the coating layer made of the low melting point resin is formed, a method of blending these resins using a mixing mill, melt-spinning the resins to form an undrawn yarn, and hot-drawing the undrawn yarn into a fiber may be adopted. Alternatively, a method of blending the resins using two twin-screw extruders each having a die 1 as shown in (a) or (b) of Fig. 1, and then forming into fiber in the same manner may also be adopted. In this case, the hydrophilic resin is extruded from a die outlet 2 and the low melting point resin is extruded from a die outlet 3 simultaneously, thereby forming an undrawn yarn. The amount of these resins to be added to the mixing mill or hopper may vary depending on the length and diameter of the composite to be obtained (fiber), but the amount of the low melting point resin is preferably 5 to 300 parts by mass, and more preferably 10 to 150 parts by mass per 100 parts by mass of the hydrophilic resin. By adding these resins in an amount within the above range, a coating layer capable of exerting desired effects to be effectively formed on the surface of the composite (fiber) made of the hydrophilic resin obtained after the stretching step.

The average length of the composite fiber (D) thus obtained is preferably 0.1 to 500 mm, more preferably 0.1 to 7 mm, and the average diameter is preferably 0.001 to 2 mm, and more preferably 0.005 to 0.5 mm. When the average length and the average diameter are within the above ranges, the composite fibers are not likely to be entangled more than necessary, and satisfactory dispersibility is also not likely to be hindered.

The aspect ratio is preferably 10 to 4,000, and more preferably 50 to 2,000. The aspect ratio means the ratio of the major axis to the minor axis of the composite fiber.

The mixing amount of the composite fiber made of the hydrophilic resin on which the coating layer is formed is preferably 0.1 to 100 parts by mass, more preferably 0.3 to 30 parts by mass, and still more preferably 0.5 to 10 parts by mass, and even more preferably 1 to 6 parts by mass per 100 parts by mass of the rubber component. When the mixing amount of the composite fiber made of the hydrophilic resin on which the coating layer is formed is within the above range, it becomes possible to maintain sufficient durability while exerting satisfactory drainage performance by forming cavities inside the composite fiber.

<Other Components>

The rubber composition of the present invention may comprise other components in addition to the components described above. The other components are not particularly limited, and additives usually used in the rubber industry, for example, fillers such as carbon black, silica, and aluminum hydroxide, softeners, antioxidants, vulcanizing agents (e.g., sulfur), vulcanization accelerators, vulcanization acceleration aids (e.g., zinc oxide and fatty acids such as stearic acid), vulcanization retarders, silane coupling agents, resins, and oils may be appropriately selected and mixed within a range that does not impair the objects of the present invention.

The rubber composition of the present invention preferably comprises a filler as the other component for the purpose of improving the reinforcing property or the like.

The mixing amount of the filler is not particularly limited and may be appropriately selected depending on the intended purpose, but is preferably 30 to 120 parts by mass, more preferably 40 to 100 parts by mass, and still more preferably 50 to 80 parts by mass per 100 parts by mass of the rubber component. When the mixing amount of the filler is 30 parts by mass or more, the effect of improving the reinforcing property due to the mixing of filler can be obtained, and when the mixing amount is 120 parts by mass or less, satisfactory workability can be maintained.

The filler is not particularly limited, and examples thereof include carbon black, silica, aluminum hydroxide, clay, alumina, talc, mica, kaolin, glass balloon, glass beads, calcium carbonate, magnesium carbonate, magnesium hydroxide, magnesium oxide, titanium oxide, potassium titanate, and barium sulfate. Of these, it is preferable to use at least one selected from carbon black and silica, and it is more preferable to use carbon black and silica in combination. These may be used singly or in combinations of two or more.

The carbon black is not particularly limited and may be appropriately selected depending on the intended purpose, and examples thereof include FEF, GPF, SRF, HAF, IISAF, ISAF, and SAF. These may be used singly or in combinations of two or more.

The silica is not particularly limited and may be appropriately selected depending on the intended purpose. The CTAB (cetyltrimethylammonium bromide) specific surface area is preferably 50 $m^2/g$ or more, more preferably 90 $m^2/g$ or more, and preferably 350 $m^2/g$ or less, more preferably 300 $m^2/g$ or less. In a case where the CTAB specific surface area of silica is 50 $m^2/g$ or more, the wear resistance is further improved, and when the CTAB specific surface area of silica is 350 $m^2/g$ or less, the rolling resistance is reduced.

Examples of silica, which are not particularly limited, include wet silica (hydrated silica), dry silica (anhydrous silica), calcium silicate, and aluminum silicate. Of them, wet silica is preferred. These silicas may be used singly or in combinations of two or more.

In a case where silica is used as the filler, the rubber composition of the present invention may comprise a silane coupling agent from the viewpoint of improving the dispersibility of the filler in the rubber composition and improving the reinforcing property.

Examples of the silane coupling agent include vinyltriethoxysilane, vinyltris (β-methoxyethoxy)silane, γ-methacryloxypropyltrimethoxysilane, vinyltriacetoxysilane, γ-glycidoxypropyltrimethoxysilane, γ-glycidoxy propyltriethoxysilane, β-(3,4-epoxycyclohexyl) ethyltrimethoxysilane, γ-chloropropylmethoxysilane, vinyltrichlorosilane, γ-mercaptopropyltrimethoxysilane, γ-aminopropyltriethoxysilane, N-β-(aminoethyl)-γ-aminopropyltrimethoxysilane, bis-triethoxysilylpropyl tetrasulfide, and bis-triethoxysilylpropyl disulfide.

These silane coupling agents may be used singly or in combinations of two or more. The content thereof is preferably, but not particularly limited to, 1 to 10% by mass, and more preferably 5 to 10% by mass per the content of the filler containing carbon black. When the content of the silane coupling agent is 1% by mass or more per the content of the filler, the effect of improving the dispersibility of the filler is sufficiently and easily developed, and when the content is 10% by mass or less, mixing an excessive amount of the coupling agent is inhibited, which is preferable from an economic viewpoint.

The rubber composition of the present invention preferably comprises a resin as the other component. Here, the resin contained as the other component is a resin other than the rubber component (A) and the composite fiber (D). The resin is preferably a thermoplastic resin, and examples thereof include an aliphatic hydrocarbon resin, an alicyclic hydrocarbon resin, a terpene resin, and a terpene phenol resin, and an aliphatic hydrocarbon resin and an alicyclic hydrocarbon resin are preferable.

Examples of the aliphatic hydrocarbon resin include petroleum resins produced by polymerization of C5 petroleum fraction. Examples of the petroleum resins produced by using high purity 1,3-pentadiene as a main raw material include trade name "Quintone 100" series (A100, B170, K100, M100, R100, N295, U190, S100, D100, U185, P195N, etc.) manufactured by ZEON CORPORATION. Examples of the other petroleum resins produced by polymerizing C5 petroleum fraction include trade name "Escorez" series (1102, 1202(U), 1304, 1310, 1315, 1395, etc.) manufactured by Exxon Mobil Corporation and trade name "Hirez" series (G-100X, -T-100X, -C-110X, -R-100X, etc.) manufactured by Mitsui Chemicals.

Examples of the alicyclic hydrocarbon resins include a cyclopentadiene petroleum resin produced by using cyclopentadiene extracted from C5 fraction as a main raw material and a dicyclopentadiene petroleum resin produced by using dicyclopentadiene in C5 fraction as a raw material. Examples of the cyclopentadiene petroleum resin produced by using high purity cyclopentadiene as a main raw material include trade name "Quintone 1000" series (1325, 1345, etc.) manufactured by ZEON CORPORATION. Examples of the dicyclopentadiene petroleum resin include trade name "Marukarez M" series (M-890A, M-845A, M-990A, etc.) manufactured by Maruzen Petrochemical.

Terpene resins refer to resins produced by using naturally derived from turpentine oil or orange oil as a main raw material. Examples thereof include trade name "YS resin" series (PX-1250, TR-105, etc.) manufactured by Yasuhara Chemical, and trade name "Piccolyte" series (A115, S115, etc.) manufactured by Hercules.

Examples of the terpene phenol resins include trade name "YS POLYSTER" series (U series such as U-130, U-115, and T series such as T-115, T-130, T-145) manufactured by Yasuhara Chemical and trade name "TAMANOL 901" manufactured by Arakawa Chemical Industries.

The content of the resin is preferably 1 to 50 parts by mass, more preferably 2 to 30 parts by mass, and still more preferably 5 to 15 parts by mass per 100 parts by mass of the rubber component (A). When the content of the resin is within the above range, the effect of improving wear resistance, breaking elongation, and breaking stress due to the interaction between the polyhydric alcohol (C) and the rubber component (A) can be maximized.

The rubber composition of the present invention preferably comprises a process oil, and examples of the process oil include paraffin oil, naphthenic oil, and aroma oil.

The content of the process oil is preferably 3 to 100 parts by mass, more preferably 5 to 50 parts by mass, and still more preferably 10 to 30 parts by mass per 100 parts by mass of the rubber component (A).

The total content of the resin and the process oil is preferably 10 to 80 parts by mass, more preferably 20 to 60 parts by mass, and still more preferably 25 to 50 parts by mass per 100 parts by mass of the rubber component.

When the content of the process oil and the total content of the resin and the process oil are within the above range, the effect of improving wear resistance, breaking elongation, and breaking stress due to the interaction between the polyhydric alcohol (C) and the rubber component (A) can be maximized.

<Preparation of Rubber Composition>

The rubber composition of the present invention may be prepared by mixing and kneading the above components using a kneader such as a Banbury mixer, a roll, or an internal mixer.

Here, the mixing amounts of the rubber component (A), the foaming agent (B), the polyhydric alcohol (C) and the like are the same as the amounts already described as the contents in the rubber component.

The respective components may be kneaded in one step, or two or more divided steps. Examples of methods of kneading those include a method in which a rubber component (A), a polyhydric alcohol (C), and another mixing component other than the vulcanizing agent and the foaming agent is kneaded in the first step, and the vulcanizing agent and the foaming agent are kneaded in the second step.

The maximum temperature of the first step of kneading is preferably 130 to 170°C and the maximum temperature of the second step is preferably 90 to 120°C.

[Vulcanized Rubber]

The vulcanized rubber of the present invention is obtained by vulcanizing the rubber composition of the present invention described above. Since foaming occurs simultaneously with the vulcanization, vulcanized rubber including air bubbles inside is obtained through vulcanization.

The vulcanization method of the rubber composition is not particularly limited, and a known vulcanization method may be applied. For example, the vulcanization may be performed by molding an unvulcanized rubber composition and then subjecting the same to vulcanization, or by performing a step of preliminary vulcanization to obtain a semi-vulcanized rubber from an unvulcanized rubber composition, and molding the same and then subjecting the semi-vulcanized rubber to main vulcanization.

<Foaming Rate>

The vulcanized rubber of the present invention has a foaming rate of preferably 3% or more, more preferably 5% or more, still more preferably 10% or more, and even more preferably 20% or more, and preferably 75% or less, more preferably 50% or less, still more preferably 45% or less, and even more preferably 40% or less from the viewpoint of improvement in both of on-ice performance and wear resistance.

The foaming rate Vs is represented by the following Formula (I).

$$Vs = [\{(\rho_0 - \rho_g)/(\rho_1 - \rho_g) - 1\}] \times 100 \ (\%) \qquad (I)$$

Here, $\rho_1$ represents the density (g/cm$^3$) of foamed rubber, $\rho_0$ represents the density (g/cm$^3$) of the solid phase portion of the foamed rubber, and $\rho_g$ represents the density (g/cm$^3$) of the gas portion in the air bubbles of the foamed rubber.

The foamed rubber is formed from a rubber solid phase portion and cavities (closed air bubbles) bounded by the rubber solid phase portion, that is, the gas portion in air bubbles.

Further, since the density $\rho_g$ of the gas portion is extremely small, close to zero, and extremely small with respect to the density po of the rubber solid phase portion, Formula (I) is substantially equivalent to the following Formula (II).

$$Vs = \{(\rho_0/\rho_1) - 1\} \times 100 \ (\%) \qquad (II)$$

[Rubber Products and Tires]

The rubber composition and the vulcanized rubber of the present invention are used for various rubber products and are suitable as tread members of tires, and particularly suitable as tread members of pneumatic tires. Examples of the infill gas of the pneumatic tires include ordinary air or air having a controlled oxygen partial pressure, and inert gases such as nitrogen, argon, and helium.

When the rubber composition or the vulcanized rubber of the present invention is used for tires, those are not limited to tread members of tires and may be used for base tread, sidewall, side-reinforcing rubber, and bead filler.

In addition, for applications other than tires, the rubber composition of the present invention may be used as vibration isolation rubber, seismic isolation rubber, belt (conveyor belt), rubber roller, various hoses, and moran.

Examples

The present invention will be described in more detail with reference to Examples given below, but the present invention is not whatsoever restricted by the following Examples.

[Mixing Components of Rubber Composition]

The components to be mixed in the rubber composition of Examples and Comparative Examples are mentioned below.

<Rubber Component (A)>

Natural rubber: TSR20

BR: Polybutadiene rubber, manufactured by JSR Corporation, trade name "BR01"

<Foaming Agent (B)>

Foaming agent A: Cellmic AN, manufactured by Sankyo Chemical Co., Ltd.
Foaming agent B: Uniform AZ, manufactured by Otsuka Chemical Co., Ltd.

<Polyhydric Alcohol (C)>

Polyhydric alcohol A: Sorbitol (manufactured by Kanto Chemical Co., Ltd., number of hydroxyl groups 6, number of hydroxyl groups/number of carbon atoms = 1)

<Composite Fiber (D)>

Composite resin A: Composite fiber (G156B, manufactured by Kuraray Co., Ltd.) in which ethylene-vinyl alcohol copolymer forms an island portion and polyethylene forms a sea portion.

<Others>

Carbon black: SAF (ASAHI #105, manufactured by Asahi Carbon Co., Ltd.)
Process oil: Petroleum hydrocarbon process oil (DAIHANA PROCESS OIL NS-28, manufactured by Idemitsu Kosan Co., Ltd.)
Silica: NIPSIL AQ, manufactured by Tosoh Silica Corporation
Silane coupling agent: Bistriethoxysilylpropyl polysulfide, manufactured by Shin-Etsu Chemical Co., Ltd.
Thermal expansion microcapsules: Matsumoto Microsphere F100MD, manufactured by Matsumoto Yushi-Seiyaku Co., Ltd.
Zinc oxide: manufactured by Hakusui Tech Co., Ltd.
Wax: Microcrystalline (Selected microcrystalline wax), manufactured by Seiko Chemical Co., Ltd.
Antioxidant: NOCRAC 6C, manufactured by Ouchi Shinko Chemical Industry Co., Ltd.
Resin: Aliphatic hydrocarbon resin (HI-REZ G-100X), manufactured by Mitsui Chemical Co., Ltd.
Vulcanization accelerator CZ: N-Cyclohexyl-2-benzothiazolylsulfenamide (Nocceler CZ, manufactured by Ouchi Shinko Chemical Industrial Co., Ltd.)
Vulcanization accelerator MBTS: Di-2-benzothiazolyl disulfide (Nocceler DM-P, manufactured by Ouchi Shinko Chemical Industry Co., Ltd.)

[Evaluation]

Evaluation in the following Examples and Comparative Examples was carried out as follows.

(1) Wear Resistance

Measurement was performed in accordance with the method B of the sliding wear test of JIS K 7218:1986. The measurement temperature was room temperature (23°C) and the load was 16N. The reciprocals of the respective wear amounts were shown as being indexed taking the reciprocal of the wear amount of the vulcanized rubber of Comparative Example 1 or Comparative Example 8 as 100. The larger the index value, the better the wear resistance.

(2) Breaking Elongation (elongation at break, EB) and Breaking Stress (tensile strength at break, TB)

Measurement was performed in accordance with JIS K 6251:2010 at a tensile speed of 300 mm/min and room temperature (23°C).
In the evaluation, the results were shown as being indexed taking the breaking elongation (EB) and the breaking stress (TB) of Comparative Example 1 or Comparative Example 8 as 100. The larger the value, the higher the breaking elongation and the breaking stress.

(Examples 1 to 5 and Comparative Examples 1 to 7)

According to the mixing formulation shown in Table 1 and using a Banbury mixer, the above-mentioned mixing components for rubber composition were kneaded to prepare samples of rubber compositions. In the final stage of kneading, sulfur serving as the vulcanizing agent, the vulcanization accelerator, and the foaming agent were added.

The obtained rubber composition was vulcanized at 160°C for 15 minutes to prepare a vulcanized rubber, and the vulcanized rubber was evaluated for wear resistance, breaking elongation, and breaking stress. The samples were evaluated based on the evaluation of Comparative Example 1 as 100.

(Examples 6 to 7 and Comparative Examples 8 to 10)

According to the mixing formulation shown in Table 2 and using a Banbury mixer, the above-mentioned mixing components for rubber composition were kneaded to prepare samples of rubber compositions. In the final stage of kneading, sulfur serving as the vulcanizing agent, the vulcanization accelerator, and the foaming agent were added.

The obtained rubber composition was vulcanized at 160°C for 15 minutes to prepare a vulcanized rubber, and the vulcanized rubber was evaluated for wear resistance, breaking elongation, and breaking stress. The samples were evaluated based on the evaluation of Comparative Example 8 as 100.

Table 1

| | | Example | | | | | Comparative Example | | | | | | |
|---|---|---|---|---|---|---|---|---|---|---|---|---|---|
| | | 1 | 2 | 3 | 4 | 5 | 1 | 2 | 3 | 4 | 5 | 6 | 7 |
| Rubber composition | Natural rubber | 50 | 50 | 50 | 70 | 50 | 50 | 50 | 50 | 15 | 15 | 70 | 50 |
| | BR | 50 | 50 | 50 | 30 | 50 | 50 | 50 | 50 | 85 | 85 | 30 | 50 |
| | Polyhydric alcohol A | 3 | 1.5 | 6 | 3 | 3 | | | 8 | | 3 | | |
| | Composite fiber A | 5 | 5 | 5 | 5 | 5 | 5 | 5 | 5 | 5 | 5 | 5 | 5 |
| | Carbon black | 30 | 30 | 30 | 30 | 30 | 30 | 30 | 30 | 30 | 30 | 30 | 30 |
| | Silica | 40 | 40 | 40 | 40 | 40 | 40 | 40 | 40 | 40 | 40 | 40 | 40 |
| | Silane coupling agent | 4 | 4 | 4 | 4 | 4 | 4 | 4 | 4 | 4 | 4 | 4 | 4 |
| | Stearic acid | 2 | 2 | 2 | 2 | 2 | 2 | 2 | 2 | 2 | 2 | 2 | 2 |
| | Zinc oxide | 2 | 2 | 2 | 2 | 2 | 2 | 2 | 2 | 2 | 2 | 2 | 2 |
| | Wax | 1.5 | 1.5 | 1.5 | 1.5 | 1.5 | 1.5 | 1.5 | 1.5 | 1.5 | 1.5 | 1.5 | 1.5 |
| | Resin | 10 | 10 | 10 | 10 | 10 | 10 | 10 | 10 | 10 | 10 | 10 | 10 |
| | Process oil | 20 | 20 | 20 | 20 | 20 | 20 | 20 | 20 | 20 | 20 | 20 | 20 |
| | Antioxidant | 1.5 | 1.5 | 1.5 | 1.5 | 1.5 | 1.5 | 1.5 | 1.5 | 1.5 | 1.5 | 1.5 | 1.5 |
| | Vulcanization Accelerator CZ | 1.5 | 1.5 | 1.5 | 1.5 | 1.5 | 1.5 | 1.5 | 1.5 | 1.5 | 1.5 | 1.5 | 1.5 |
| | Vulcanization Accelerator MBTS | 1 | 1 | 1 | 1 | 1 | 1 | 1 | 1 | 1 | 1 | 1 | 1 |
| | Foaming agent A | 5 | 5 | 5 | 5 | | 5 | 4.5 | 5 | 5 | 5 | 5 | |
| | Foaming agent B | | | | | 5 | | | | | | | 5 |
| | Sulfur | 1 | 1 | 1 | 1 | 1 | 1 | 1 | 1 | 1 | 1 | 1 | 1 |
| Evaluation | Foaming rate (%) | 39 | 37 | 37 | 40 | 36 | 40 | 36 | 41 | 37 | 38 | 41 | 35 |
| | TB | 110 | 118 | 111 | 134 | 165 | 100 | 103 | 98 | 85 | 86 | 114 | 132 |
| | EB | 115 | 113 | 113 | 111 | 169 | 100 | 98 | 116 | 98 | 97 | 97 | 120 |
| | Wear resistance | 237 | 211 | 168 | 136 | 230 | 100 | 105 | 112 | 115 | 113 | 76 | 99 |

Table 2

| | | | Example | | Comparative Example | | |
|---|---|---|---|---|---|---|---|
| | | | 6 | 7 ★ | 8 | 9 | 10 |
| Rubber composition | | Natural rubber | 50 | 50 | 50 | 50 | 50 |
| | | BR | 50 | 50 | 50 | 50 | 50 |
| | | Polyhydric alcohol A | 3 | 3 | | | 3 |
| | | Composite fiber A | 5 | | 5 | 5 | 5 |
| | | Carbon black | 30 | 30 | 30 | 30 | 30 |
| | | Silica | 40 | 40 | 40 | 40 | 40 |
| | | Silane coupling agent | 4 | 4 | 4 | 4 | 4 |
| | | Stearic acid | 2 | 2 | 2 | 2 | 2 |
| | | Zinc oxide | 2 | 2 | 2 | 2 | 2 |
| | | Wax | 1.5 | 1.5 | 1.5 | 1.5 | 1.5 |
| | | Resin | 10 | 10 | 10 | 10 | 10 |
| | | Process oil | 20 | 20 | 20 | 20 | 20 |
| | | Antioxidant | 1.5 | 1.5 | 1.5 | 1.5 | 1.5 |
| | | Vulcanization Accelerator CZ | 1.5 | 1.5 | 1.5 | 1.5 | 1.5 |
| | | Vulcanization Accelerator MBTS | 1 | 1 | 1 | 1 | 1 |
| | | Foaming agent A | 5 | 5 | 5 | | |
| | | Thermal expansion microcapsules | | | | 5 | 5 |
| | | Sulfur | 1 | 1 | 1 | 1 | 1 |
| Evaluation | | Foaming rate (%) | 21 | 20 | 21 | - | - |
| | | TB | 103 | 102 | 100 | 111 | 130 |
| | | EB | 100 | 100 | 100 | 111 | 120 |
| | | Wear resistance | 120 | 119 | 100 | 86 | 99 |

* not according to the invention

Industrial Applicability

According to the present invention, a rubber composition from which a vulcanized rubber having excellent wear resistance and a high breaking elongation and a high breaking stress can be provided. Further, according to the present invention, a rubber product such as a tire having excellent wear resistance and a high breaking elongation and a high breaking stress can be provided.

Reference Signs List

1   Die
2   Die outlet (Die outlet for hydrophilic resin extrusion)
3   Die outlet (Die outlet for low melting point resin extrusion)

**Claims**

1. A rubber composition comprising:

   a rubber component (A);
   a foaming agent (B);
   a polyhydric alcohol (C) having 3 or more hydroxyl groups per molecule; and
   a composite fiber (D),
   wherein the rubber component (A) comprises 30% by mass or more of natural rubber based on the entire rubber component,
   a content of the polyhydric alcohol (C) is 1 to 6 parts by mass per 100 parts by mass of the rubber component (A), and
   wherein the composite fiber (D) is made of a hydrophilic resin having a coating layer formed on the surface and the coating layer is made of a polyolefin resin.

2. The rubber composition according to claim 1,
   wherein the polyhydric alcohol (C) is a linear polyhydric alcohol in which a linear aliphatic hydrocarbon is substituted with 3 or more hydroxyl groups.

3. The rubber composition according to claim 1 or 2,
   wherein the number of hydroxyl groups that the polyhydric alcohol (C) has per molecule is more than a half of the number of carbon atoms per molecule.

4. The rubber composition according to any one of claims 1 to 3,
   wherein a melting point of the polyhydric alcohol (C) is 170°C or less.

5. The rubber composition according to any one of claims 1 to 4,
   wherein a content of the foaming agent (B) is 0.1 to 20 parts by mass per 100 parts by mass of the rubber component (A).

6. The rubber composition according to any one of claims 1 to 5,
   wherein the hydrophilic resin of the composite fiber (D) is a resin containing an oxygen atom, a nitrogen atom or a sulfur atom.

7. The rubber composition according to any one of claims 1 to 6,
   wherein the hydrophilic resin of the composite fiber (D) is at least one of selected from the group consisting of an ethylene-vinyl alcohol copolymer, a vinyl alcohol homopolymer, a (meth)acrylic resin including a poly(meth)acrylic acid resin, a resin made of an ester of the poly(meth)acrylic acid resin, a copolymer containing a structural unit derived from (meth)acrylic acid and a (co)polymer containing a structural unit derived from (meth)acrylate, a polyamide resin, a polyethylene glycol resin, a carboxyvinyl copolymer, a styrene-maleic acid copolymer, a polyvinylpyrrolidone resin, a vinyl pyrrolidone-vinyl acetate copolymer, a polyester resin, and a cellulosic resin.

8. The rubber composition according to claim 7,
   wherein the hydrophilic resin of the composite fiber (D) is an ethylene-vinyl alcohol copolymer.

9. The rubber composition according to any one of claims 1 to 8,
   wherein the coating layer of the composite fiber (D) is made of at least one selected from the group consisting of a polyethylene resin, a polypropylene resin, a polyolefin ionomer, and a maleic anhydride-modified $\alpha$-polyolefin.

10. The rubber composition according to any one of claims 1 to 9,
    wherein the aspect ratio of the composite fiber (D) is from 10 to 4,000.

11. A vulcanized rubber obtained by vulcanizing the rubber composition according to any one of claims 1 to 10.

12. The vulcanized rubber according to claim 11,
    having a foaming rate of 5 to 50%.

13. A rubber product comprising:

14

the rubber composition according to any one of claims 1 to 10; or
the vulcanized rubber according to claim 11 or 12.

14. A tire comprising:

the rubber composition according to any one of claims 1 to 10; or
the vulcanized rubber according to claim 11 or 12.


**Patentansprüche**

1. Kautschukzusammensetzung, die Folgendes umfasst:

    einen Kautschukbestandteil (A);
    ein Schaummittel (B);
    einen mehrwertigen Alkohol (C), der 3 oder mehr Hydroxylgruppen je Molekül aufweist; und
    eine Verbundfaser (D);
    wobei der Kautschukbestandteil (A) 30 Masse-% oder mehr an Naturkautschuk auf Grundlage des gesamten Kautschukbestandteils umfasst;
    ein Gehalt des mehrwertigen Alkohols (C) 1 bis 6 Masseanteile je 100 Masseanteile des Kautschukbestandteils (A) beträgt; und
    wobei die Verbundfaser (D) aus einem hydrophilen Harz hergestellt ist, wobei sie eine auf der Oberfläche geformte Überzugslage aufweist und die Überzugslage aus einem Polyolefinharz hergestellt ist.

2. Kautschukzusammensetzung nach Anspruch 1,
    wobei der mehrwertige Alkohol (C) ein linearer mehrwertiger Alkohol ist, in dem ein linearer aliphatischer Kohlenwasserstoff mit 3 oder mehr Hydroxylgruppen substituiert ist.

3. Kautschukzusammensetzung nach Anspruch 1 oder 2,
    wobei die Anzahl von Hydroxylgruppen, die der mehrwertige Alkohol (C) je Molekül aufweist, mehr als eine Hälfte der Anzahl von Kohlenstoffatomen je Molekül beträgt.

4. Kautschukzusammensetzung nach einem der Ansprüche 1 bis 3,
    wobei ein Schmelzpunkt des mehrwertigen Alkohols (C) 170 °C oder weniger beträgt.

5. Kautschukzusammensetzung nach einem der Ansprüche 1 bis 4,
    wobei ein Gehalt des Schaummittels (B) 0,1 bis 20 Masseanteile je 100 Masseanteile des Kautschukbestandteils (A) beträgt.

6. Kautschukzusammensetzung nach einem der Ansprüche 1 bis 5,
    wobei das hydrophile Harz der Verbundfaser (D) ein Harz ist, das ein Sauerstoffatom, ein Stickstoffatom oder ein Schwefelatom enthält.

7. Kautschukzusammensetzung nach einem der Ansprüche 1 bis 6,
    wobei das hydrophile Harz der Verbundfaser (D) mindestens eines ist, das ausgewählt ist aus der Gruppe, die aus einem Ethylen-Vinylalkohol-Copolymer, einem Vinylalkohol-Homopolymer, einem (Meth)acrylharz, das ein Poly(meth)acrylsäure-Harz einschließt, einem Harz, das aus einem Ester des Poly(meth)acrylsäure-Harzes hergestellt ist, einem Copolymer, das eine Struktureinheit enthält, die von (Meth)acrylsäure abgeleitet ist, und einem (Co)polymer, das eine Struktureinheit enthält, die von (Meth)acrylat abgeleitet ist, einem Polyamidharz, einem Polyethylenglycolharz, einem Carboxyvinyl-Copolymer, einem Styrol-Maleinsäure-Copolymer, einem Polyvinylpyrrolidonharz, einem Vinylpyrrolidon-Vinylacetat-Copolymer, einem Polyesterharz und einem Zelluloseharz besteht.

8. Kautschukzusammensetzung nach Anspruch 7,
    wobei das hydrophile Harz der Verbundfaser (D) ein Ethylen-Vinylalkohol-Copolymer ist.

9. Kautschukzusammensetzung nach einem der Ansprüche 1 bis 8,
    wobei die Überzugslage der Verbundfaser (D) aus mindestens einem hergestellt ist, das ausgewählt ist aus der Gruppe, die aus einem Polyethylenharz, einem Polypropylenharz, einem Polyolefin-Ionomer und einem maleinsäu-

reanhydridmodifizierten $\alpha$-Polyolefin besteht.

10. Kautschukzusammensetzung nach einem der Ansprüche 1 bis 9,
wobei das Streckungsverhältnis der Verbundfaser (D) 10 bis 4 000 beträgt.

11. Vulkanisierter Kautschuk, erhalten durch Vulkanisieren der Kautschukzusammensetzung nach einem der Ansprüche 1 bis 10.

12. Vulkanisierter Kautschuk nach Anspruch 11,
der eine Schäumrate von 5 bis 50 % aufweist.

13. Kautschukerzeugnis, das Folgendes umfasst:

die Kautschukzusammensetzung nach einem der Ansprüche 1 bis 10; oder
den vulkanisierten Kautschuk nach Anspruch 11 oder 12.

14. Reifen, der Folgendes umfasst:

die Kautschukzusammensetzung nach einem der Ansprüche 1 bis 10; oder
den vulkanisierten Kautschuk nach Anspruch 11 oder 12.

## Revendications

1. Composition de caoutchouc, comprenant :

un composant de caoutchouc (A) ;
un agent moussant (B);
un alcool polyhydrique (C) ayant 3 groupes hydroxyle ou plus par molécule ; et
une fibre composite (D) ;
dans laquelle le composant de caoutchouc (A) comprend 30 % en poids ou plus de caoutchouc naturel sur la base de l'ensemble du composant de caoutchouc ;
une teneur en alcool polyhydrique (C) représente 1 à 6 parties en poids pour 100 parties en poids du composant de caoutchouc (A) ; et
dans laquelle la fibre composite (D) est composée d'une résine hydrophile comportant une couche de revêtement formée sur la surface, et la couche de revêtement est composée d'une résine de polyoléfine.

2. Composition de caoutchouc selon la revendication 1,
dans laquelle l'alcool polyhydrique (C) est un alcool polyhydrique linéaire dans lequel un hydrocarbure aliphatique linéaire est substitué par 3 groupes hydroxyle ou plus.

3. Composition de caoutchouc selon les revendications 1 ou 2,
dans laquelle le nombre de groupes hydroxyde que l'alcool polyhydrique (C) comporte par molécule est supérieur à une moitié du nombre d'atomes de carbone par molécule.

4. Composition de caoutchouc selon l'une quelconque des revendications 1 à 3,
dans laquelle un point de fusion de l'alcool polyhydrique (C) est de 170 °C ou moins.

5. Composition de caoutchouc selon l'une quelconque des revendications 1 à 4,
dans laquelle une teneur en agent moussant (B) représente 0,1 à 20 parties en poids pour 100 parties en poids du composant de caoutchouc (A).

6. Composition de caoutchouc selon l'une quelconque des revendications 1 à 5,
dans laquelle la résine hydrophile de la fibre composite (D) est une résine contenant un atome d'oxygène, un atome d'azote ou un atome de soufre.

7. Composition de caoutchouc selon l'une quelconque des revendications 1 à 6,
dans laquelle la résine hydrophile de la fibre composite (D) est au moins un élément sélectionné dans le groupe constitué par un copolymère éthylène-alcool vinylique, un homopolymère d'alcool vinylique, une résine (méth)acrylique incluant une résine d'acide poly(méth)acrylique, une résine composée d'un ester de la résine d'acide poly(méth)acrylique, un copolymère contenant une unité structurale dérivée de l'acide (méth)acrylique et un (co)polymère contenant une unité structurale dérivée du (méth)acrylate, une résine de polyamide, une résine de polyéthylène-glycol, un copolymère carboxyvinylique, un copolymère styrène-acide maléique, une résine de polyvinylpyrrolidone, un copolymère vinyl pyrrolidone-acétate de vinyle, une résine de polyester et une résine cellulosique.

8. Composition de caoutchouc selon la revendication 7,
dans laquelle la résine hydrophile de la fibre composite (D) est un copolymère éthylène-alcool vinylique.

9. Composition de caoutchouc selon l'une quelconque des revendications 1 à 8,
dans laquelle la couche de revêtement de la fibre composite (D) est composée d'au moins un élément sélectionné dans le groupe constitué par une résine de polyéthylène, une résine de polypropylène, un ionomère de polyoléfine, et une $\alpha$-polyoléfine modifiée par l'anhydride maléique.

10. Composition de caoutchouc selon l'une quelconque des revendications 1 à 9,
dans laquelle le rapport d'aspect de la fibre composite (D) est compris entre 10 et 4 000.

11. Caoutchouc vulcanisé obtenu par vulcanisation de la composition de caoutchouc selon l'une quelconque des revendications 1 10.

12. Caoutchouc vulcanisé selon la revendication 11,
présentant un taux de moussage compris entre 5 et 50 %.

13. Produit de caoutchouc, comprenant :

la composition de caoutchouc selon l'une quelconque des revendications 1 à 10 ; ou
le caoutchouc vulcanisé selon les revendications 11 ou 12.

14. Bandage pneumatique, comprenant :

la composition de caoutchouc selon l'une quelconque des revendications 1 à 10 ; ou
le caoutchouc vulcanisé selon les revendications 11 ou 12.

[Fig. 1]

(a)

1

(b)

1

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2014172379 A